# EUROPÄISCHE PATENTANMELDUNG

(11) **EP 2 876 323 A2**
(43) Veröffentlichungstag der Anmeldung: **27.05.2015**
(21) Anmeldenummer: 14190981.2
(22) Anmeldetag: 30.10.2014
(51) Int. Cl.: F16D 25/08, F16D 48/02

(54) **Ausrückvorrichtung**

(30) Priorität: 22.11.2013 DE 102013223871; 14.04.2014 DE 102014207079; 15.04.2014 DE 102014207265
(71) Anmelder: Schaeffler Technologies AG & Co. KG, 91074 Herzogenaurach (DE)
(72) Erfinder: Guldenschuh, Dominik, 79115 Freiburg (DE); Honselmann, Sebastian, 77886 Lauf (DE)

(57) **Zusammenfassung**

Die Erfindung betrifft eine Ausrückvorrichtung zur pedalbetätigten Betätigung einer Kupplung als auch zur automatisierten Betätigung der Kupplung, wobei ein erstes Ausrückbetätigungsmittel und ein zweites Ausrückbetätigungsmittel vorgesehen ist, um ein verlagerbares Kupplungsbetätigungsmittel zu beaufschlagen zur Betätigung der Kupplung, wobei das erste Ausrückbetätigungsmittel eine Kolben-Zylindereinheit aufweist, wobei zumindest ein Kolben in dem Zylinder durch Pedalbetätigung druckmittelverlagerbar ist, um mittels des zumindest einen verlagerbaren Kolbens das Kupplungsbetätigungsmittel zu beaufschlagen.

## Beschreibung

Die Erfindung betrifft eine Ausrückvorrichtung, insbesondere für eine Kupplung eines Schaltgetriebes eines Kraftfahrzeugs.

Kraftfahrzeuge mit Schaltgetriebe weisen eine Kupplung auf, die mittels eines Fußpedals betätigt wird. Dabei wird das Schaltgetriebe mittels eines Schalthebels geschaltet, so dass mittels des Schalthebels in einer Wählbewegung das einzulegende Übersetzungsverhältnis ausgewählt wird und mittels einer Schaltbewegung wird das ausgewählte Übersetzungsverhältnis, der einzulegende Gang, eingelegt. Dabei wird vor dem Schaltvorgang die Kupplung ausgerückt. Ist die Übersetzungsstufe im Getriebe eingelegt, so wird für den Kraftschluss zwischen Antriebsmotor und Getriebe die Kupplung wieder eingerückt.

Bei hydraulischen Kupplungsbetätigungssystemen sind ein Kupplungsgeberzylinder, ein Leitungssystem, ein Reservoir und ein Kupplungsnehmerzylinder vorgesehen, wobei der Kupplungsgeberzylinder mittels des Kupplungspedals betätigt wird. Durch das Betätigen des Kupplungspedales wird der Kolben des Kupplungsgeberzylinders in den Zylinder eingefahren, wodurch das in ihm und dem restlichen System vorhandene Fluid durch das Leitungssystem gedrückt wird und somit ein Ausfahren des Kolbens des Kupplungsnehmerzylinders bewirkt wird. Der Kolben oder eine damit verbundene Kolbenstange des Kupplungsnehmerzylinders drückt auf einen Hebel, so dass das am Hebel angebrachte Ausrücklager gegen die Tellerfeder der Kupplung drückt. Dadurch wird die Kupplung ausgerückt und der Kraftfluss zwischen Antriebsmotor und Getriebe wird unterbrochen. Es kann eine Übersetzungsstufe im Getriebe eingelegt werden. Nach dem Einlegen der gewünschten Übersetzungsstufe kann der Fahrer das Kupplungspedal wieder loslassen. Sobald der Fahrer den Druck auf das Pedal reduziert, wird durch den Gegendruck der in der Kupplung verbauten Tellerfeder das Ausrücklager und somit der Kolben des Kupplungsnehmerzylinders zurück in Ausgangsposition gedrückt werden. Durch diesen Vorgang wird der Druck der Tellerfeder durch das im System vorhandene Fluid auf den Kolben des Kupplungsgeberzylinders übertragen. Dadurch fährt der Kolben ebenfalls gleichzeitig in seine Ausgangsposition zurück und drückt dadurch das Kupplungspedal in seine Ausgangstellung zurück.

Durch diese Getriebe und damit verwendete Kupplungen nach dem Stand der Technik ergeben sich in manchen Fahrsituationen Komfortnachteile für den Fahrer des Fahrzeugs. Bei einem Fahrzeug mit Automatikgetriebe muss der Fahrer nur den Fuß von der Bremse nehmen, damit das Fahrzeug anrollen kann, wenn die geeignete Fahrstufe eingelegt ist. Auch muss nur die Bremse wieder gedrückt werden, damit das Fahrzeug wieder zum Stillstand kommt. Bei einem Fahrzeug mit Schaltgetriebe muss zusätzlich die Kupplung bei jedem Anfahren oder Anhalten pedalbetätigt geschlossen oder geöffnet werden. So muss zum Beispiel in Stausituationen bei ständigem "Stop and Go"-Verkehr die Kupplung immer wieder pedalbetätigt werden, um mit dem Fahrzeug ein Stück weiter fahren zu können. Auch das Anfahren an bergaufführenden Fahrbahnabschnitten wird durch das pedalbetätigte Betätigen der Kupplung im Vergleich zu einem Fahrzeug mit Automatikgetriebe erschwert. Hier wird ein gewisses "Spiel" mit der Kupplung sowie eine gewisse Gaspedalanforderung an den Motor benötigt, um ruck frei und flüssig Anfahren zu können.

Es ist die Aufgabe der Erfindung, eine Ausrückvorrichtung zu schaffen, welche sowohl das manuelle beispielsweise pedalbetätigte Ein- oder Ausrücken als auch ein automatisiertes Ein- oder Ausrücken einer Kupplung erlaubt.

Die Aufgabe der Erfindung wird mit den Merkmalen von Anspruch 1 gelöst.

Ein Ausführungsbeispiel der Erfindung betrifft eine Ausrückvorrichtung zur pedalbetätigten Betätigung einer Kupplung als auch zur automatisierten Betätigung der Kupplung, wobei ein erstes Ausrückbetätigungsmittel und ein zweites Ausrückbetätigungsmittel vorgesehen ist, um ein verlagerbares Kupplungsbetätigungsmittel zu beaufschlagen zur Betätigung der Kupplung, wobei das erste Ausrückbetätigungsmittel eine Kolben-Zylindereinheit aufweist, wobei zumindest ein Kolben in dem Zylinder durch Pedalbetätigung druckmittelverlagerbar ist, um mittels des zumindest einen verlagerbaren Kolbens das Kupplungsbetätigungsmittel zu beaufschlagen. Dies erlaubt zum einen ein automatisiertes Anfahren, wenn dies vom Fahrer gewünscht wird. In diesem Betriebsfalle müsste der Fahrer wenn die automatisierte Funktion aktiviert ist, das Kupplungspedal beim Anfahren oder Anhalten nicht mehr betätigen. Andererseits kann der Fahrer zweitens auch zu jeder Zeit durch manuelles Treten des Pedals die Kupplung selbst ausrücken und so in die automatisierte Betätigung der Kupplung eingreifen.

Das Kupplungspedal bewegt sich dabei beim Betrieb des automatisierten Betätigens vorteilhaft nicht, sondern verbleibt vorteilhaft in seiner Ausgangsposition im unbetätigten Zustand.

Dabei ist es besonders vorteilhaft, wenn das zweite Ausrückbetätigungsmittel auch eine Kolben-Zylindereinheit aufweist, wobei zumindest ein Kolben in dem Zylinder mittels eines Aktuators druckmittelverlagerbar ist, um mittels des zumindest einen verlagerbaren Kolbens das Kupplungsbetätigungsmittel zu beaufschlagen. Der Aktuator kann dabei ein Druckmittelaktuator sein, welcher automatisiert die Kupplung ansteuern kann. So kann neben einer pedalbetätigten Betätigung auch parallel dazu eine automatisierte Betätigung durchgeführt werden.

Auch ist es vorteilhaft, wenn das erste Ausrückbetätigungsmittel parallel zum zweiten Ausrückbetätigungsmittel angeordnet ist. Dann können diese bevorzugt platzsparend angeordnet werden und es können beide die Kupplung über das gleiche Kupplungsbetätigungsmittel betätigen.

Besonders vorteilhaft ist es, wenn der Kolben des ersten Ausrückbetätigungsmittels parallel zum Kolben des zweiten Ausrückbetätigungsmittels verlagerbar angeordnet ist.

Dabei ist es auch vorteilhaft, wenn ein Gehäuse vorgesehen ist, in welchem die Kolben-Zylindereinheit des ersten Ausrückbetätigungsmittels und die Kolben-Zylindereinheit des zweiten Ausrückbetätigungsmittels angeordnet sind. So kann eine bauraumsparende Vorrichtung geschaffen werden.

Auch ist es vorteilhaft, wenn eine Kolben-Zylindereinheit zwei Kolben aufweist, welche relativ zueinander verlagerbar sind, wobei einer der Kolben dazu dient, das Kupplungsbetätigungsmittel zu beaufschlagen. Dadurch lassen sich die Druckübertragung und die Kraftbeaufschlagung durch eine Feder im Zylinder gut bewältigen.

Weiterhin ist es zweckmäßig, wenn das zweite Ausrückbetätigungsmittel eine Seilzugvorrichtung aufweist, welche einen Aktuator zur Beaufschlagung eines am Kupplungsbetätigungsmittel angelenkten Seils auf Zug zu beaufschlagen. So kann eine Betätigung von der anderen Seite erfolgen, wenn dies der Bauraum beispielsweise zulässt.

Dabei ist es vorteilhaft, wenn die Seilzugvorrichtung an dem Kupplungsbetätigungsmittel in der entgegengesetzten Richtung angreift, wie das erste Ausrückbetätigungsmittel.

So ist es entsprechend auch vorteilhaft, wenn die Seil-zugvorrichtung relativ zu dem Kupplungsbetätigungsmittel auf entgegengesetzter Seite angeordnet ist, wie das erste Ausrückbetätigungsmittel.

Besonders vorteilhaft ist es, wenn das Kupplungsbetätigungsmittel ein verschwenkbarer Ausrückhebel ist. An diesem kann sowohl ein Kolben einer Kolben-Zylindereinheit beispielsweise über eine Kolbenstange oder ähnliches angreifen oder es kann auch ein Seil eines Seilzugaktuators angreifen.

Die vorliegende Erfindung wird nachfolgend anhand bevorzugter Ausführungsbeispiele in Verbindung mit den zugehörigen Figuren näher erläutert:
Dabei zeigen:
   - Figur 1: eine schematische Schnittansicht einer Kupplung mit Ausrückvorrichtung zum pedalbetätigten Betätigen der Kupplung,
   - Figur 2: eine Ausrückvorrichtung nach Figur 1,
   - Figur 3: ein Schnitt durch die Ausrückvorrichtung nach Figur 2,
   - Figur 4: eine schematische Schnittansicht einer erfindungsgemäßen Ausrückvorrichtung,
   - Figur 5: eine schematische Ansicht der Ausrückvorrichtung nach Figur 4,
   - Figur 6: eine schematische Ansicht der Ausrückvorrichtung mit Ausrückhebel,
   - Figur 7: eine schematische Ansicht der Ausrückvorrichtung nach einer der Figuren 1 bis 3 mit Ausrückhebel und Zugseil,
   - Figur 8: eine schematische Ansicht der Ausrückvorrichtung nach einer der Figuren 1 bis 3 mit Ausrückhebel und Zugseil.

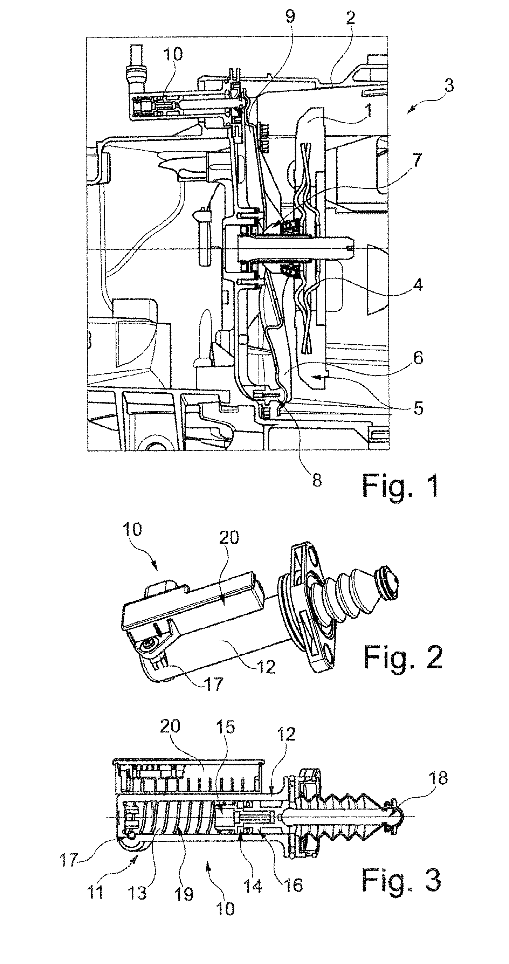

Die Figur 1 zeigt in einer schematischen Ansicht eine Kupplung 1 in einer Kupplungsglocke 2 eines Getriebes 3, wobei die Kupplung 1 nur schematisch mit der Tellerfeder 4 und der Hüllkurve 5 angedeutet ist. Zur Betätigung der Kupplung 1 ist ein Kupplungsbetätigungsmittel 6 vorgesehen, welches im Ausführungsbeispiel der Figur 1 als verschwenkbarer Ausrückhebel 6 ausgebildet ist. An dem Ausrückhebel ist ein Ausrücklager 7 angeordnet, mittels welchem die Tellerfeder 4 zum Ein- oder Ausrücken beaufschlagbar ist. Der Ausrückhebel 6 ist an einem Schwenklager 8 verschwenkbar gelagert und wird an seinem dem Schwenklager 8 gegenüberliegenden Ende 9 mittels eines ersten Ausrückbetätigungsmittels 10 beaufschlagt, um die Kupplung 1 ein- oder auszurücken. Bei einer Verschwenkung des Ausrückhebels 6 nach rechts auf die Kupplung 1 zu, wird die Kupplung 1 dabei ausgerückt. Wird der Hebel wieder entgegen der Rückstellkraft nach links verschwenkt, so wird die Kupplung eingerückt.

Die Figuren 2 und 3 zeigen das erste Ausrückbetätigungsmittel 10 in einer vergrößerten Darstellung bzw. im Schnitt. Das erste Ausrückbetätigungsmittel 10 weist eine Kolben-Zylindereinheit 11 mit einem Gehäuse 12 und einem darin angeordneten Zylinder 13 auf, wobei zwei Kolben 15,16 in dem Zylinder 13 verlagerbar angeordnet sind. Zwischen den Kolben 15,16 ist eine Dichtung 14 zur Abdichtung des Zylinders angeordnet. Wird über die Einströmöffnung 17 ein Druckmittel beaufschlagt, so wird der Kolben 15 nach rechts beaufschlagt und er verschiebt den Kolben 16, welcher mit einer Kolbenstange 18 verbunden ausgebildet ist. Die Kolbenstange 18 dient der Beaufschlagung des Ausrückbetätigungsmittels 6.

Wird der Druck der Druckmittelbeaufschlagung reduziert, so verfährt der Kolben 15 wieder nach links, wobei diese Verschiebung nach links entgegen der Rückstellkraft des Kraftspeichers 19 erfolgt, welcher in dem Zylinder 13 angeordnet ist und sich axial zwischen der Stirnwand des Zylinders und dem Kolben 15 abstützt.

Aufgrund der Rückstellkraft der Tellerfeder 4 der Kupplung 1 wird auch der Kolben 16 nach links beaufschlagt.

An einem der Kolben15,16 ist bevorzugt ein Sensorelement angeordnet, welches von einem außerhalb des Gehäuses 12 angeordneten Sensormittels 20 detektiert wird, um die Position des Kolbens 15,16 zu detektieren.

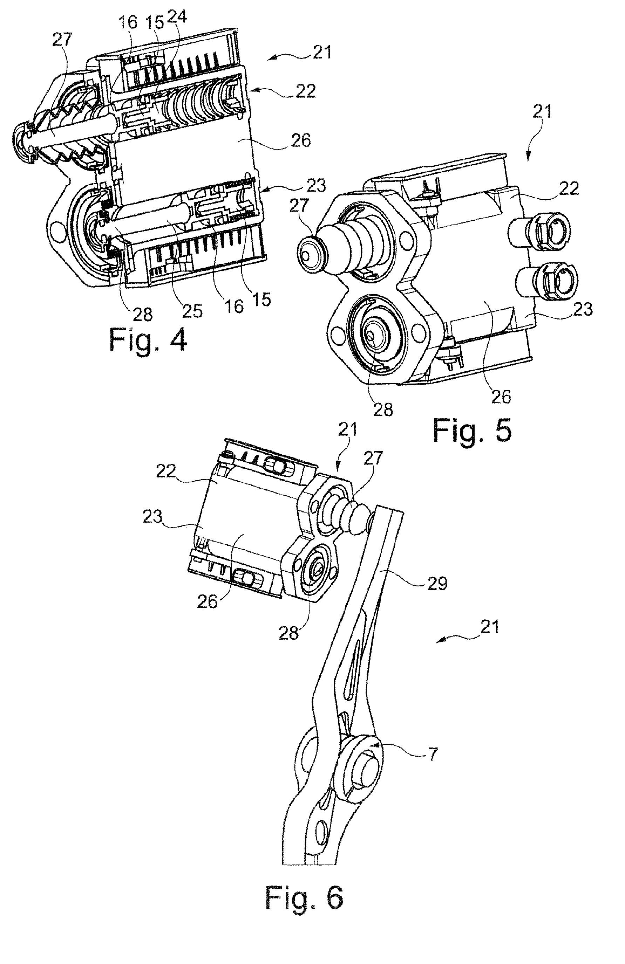

Die Figuren 4, 5 und 6 zeigen eine Ausrückvorrichtung 21 mit zwei Ausrückbetätigungsmitteln 22, 23. Das erste Ausrückbetätigungsmittel 22 und das zweite Ausrückbetätigungsmittel 23 sind im Wesentlichen gleich dem Ausrückbetätigungsmittel 10 ausgebildet, wie es in den Figuren 2 und 3 beschrieben ist, wobei die beiden Kolben-Zylindereinheiten 24,25 in einem gemeinsamen Gehäuse 26 ausgebildet sind, aus welchem die Kolbenstangen 27,28 herausragen, um ein Kupplungsbetätigungsmittel 29 betätigen zu können. In den Figuren 4 bis 6 ist zu erkennen, dass die Kolben-Zylindereinheiten 24 und 25 parallel zueinander ausgerichtet sind und die Kolben und die Kolbenstangen parallel zueinander verschiebbar sind und diese alternativ oder gleichzeitig das Kupplungsbetätigungsmittel 29 beaufschlagen können.

Entsprechend kann je nach Ansteuerung oder Pedalbetätigung entweder das eine oder das andere Ausrückbetätigungsmittel 22, 23 das Kupplungsbetätigungsmittel 29 beaufschlagen und es kann eine automatisierte Betätigung und auch eine Pedalbetätigung der Kupplung 1 realisiert werden.

Die Ausrückvorrichtung 21 kann in eine Aufnahme aufgenommen werden, wie bevorzugt in eine Aufnahme der Kupplungsglocke eines Getriebes.

Alternativ dazu könnten die Ausrückbetätigungsmittel 22, 23 auch nicht in einem gemeinsamen Gehäuse 26 integriert sein, sondern mit ihren jeweiligen Gehäusen auch parallel zueinander verbaut sein, so dass im Wesentlichen zwei Ausrückbetätigungsmittel 10, insbesondere parallel zueinander, angeordnet wären.

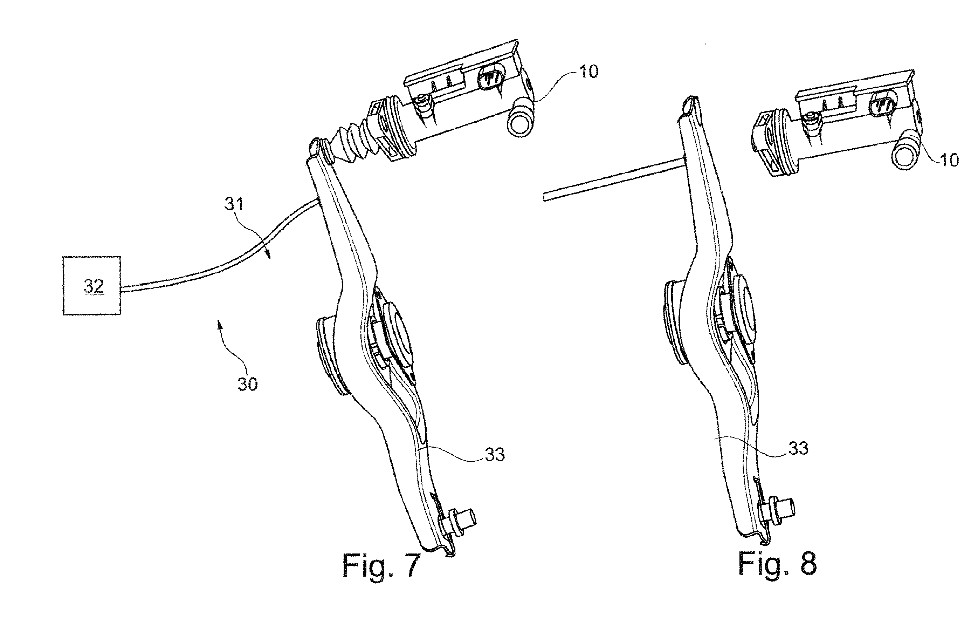

Gemäß der Figuren 7 und 8 ist neben dem ersten Ausrückbetätigungsmittel 10 gemäß der Figuren 2 und 3 ein zweites Ausrückbetätigungsmittel 30 als eine Seilzugvorrichtung angeordnet, welche ein Seil 31 aufweist, welches mit dem Kupplungsbetätigungsmittel 33 verbunden ist und einen Aktuator 32 aufweist, welcher zur Beaufschlagung des am Kupplungsbetätigungsmittel 33 angelenkten Seils 31 auf Zug dient. Dadurch kann von der dem ersten Ausrückbetätigungsmittel 10 gegenüber liegenden Seite eine Beaufschlagung des Ausrückbetätigungsmittels 33 mittels des zweiten Ausrückbetätigungsmittels 30 erfolgen, wobei das erste Ausrückbetätigungsmittel 10 das Kupplungsbetätigungsmittel 33 auf Druck beaufschlagt.

Die Figur 7 zeigt, wie das erste Ausrückbetätigungsmittel 10 das Kupplungsbetätigungsmittel 33 auf Druck beaufschlagt und verschwenkt, während das zweite Kupplungsbetätigungsmittel 30 nicht aktiv ist.

Die Figur 8 zeigt, wie das zweite Ausrückbetätigungsmittel 30 das Kupplungsbetätigungsmittel 33 auf Zug beaufschlagt und verschwenkt, während das erste Kupplungsbetätigungsmittel 10 nicht aktiv ist.

### Bezugszeichenliste

- 1: Kupplung
- 2: Kupplungsglocke
- 3: Getriebe
- 4: Tellerfeder
- 5: Hüllkurve
- 6: Kupplungsbetätigungsmittel
- 7: Ausrücklager
- 8: Schwenklager
- 9: Ende
- 10: Ausrückbetätigungsmittel
- 11: Kolben-Zylindereinheit
- 12: Gehäuse
- 13: Zylinder
- 14: Dichtung
- 15: Kolben
- 16: Kolben
- 17: Einströmöffnung
- 18: Kolbenstange
- 19: Kraftspeicher
- 20: Sensormittel
- 21: Ausrückvorrichtung
- 22: Ausrückbetätigungsmittel
- 23: Ausrückbetätigungsmittel
- 24: Kolben-Zylindereinheit
- 25: Kolben-Zylindereinheit
- 26: Gehäuse
- 27: Kolbenstange
- 28: Kolbenstange
- 29: Kupplungsbetätigungsmittel
- 30: Ausrückbetätigungsmittel
- 31: Seil
- 32: Aktuator
- 33: Kupplungsbetätigungsmittel

## Patentansprüche

1. Ausrückvorrichtung zur pedalbetätigten Betätigung einer Kupplung (1) als auch zur automatisierten Betätigung der Kupplung (1), wobei ein erstes Ausrückbetätigungsmittel (10,22) und ein zweites Ausrückbetätigungsmittel (23,30) vorgesehen ist, um ein verlagerbares Kupplungsbetätigungsmittel (6,29,33) zu beaufschlagen zur Betätigung der Kupplung (1), wobei das erste Ausrückbetätigungsmittel (10,22) eine Kolben-Zylindereinheit (11,24) aufweist, wobei zumindest ein Kolben (15,16) in dem Zylinder (13) durch Pedalbetätigung druckmittelverlagerbar ist, um mittels des zumindest einen verlagerbaren Kolbens (15,16) das Kupplungsbetätigungsmittel (6) zu beaufschlagen.

2. Ausrückvorrichtung nach Anspruch 1, **dadurch gekennzeichnet, dass** das zweite Ausrückbetätigungsmittel (23) eine Kolben-Zylindereinheit (25) aufweist, wobei zumindest ein Kolben in dem Zylinder mittels eines Aktuators druckmittelverlagerbar ist, um mittels des zumindest einen verlagerbaren Kolbens das Kupplungsbetätigungsmittel (6,29) zu beaufschlagen.

3. Ausrückvorrichtung nach Anspruch 2, **dadurch gekennzeichnet, dass** das erste Ausrückbetätigungsmittel (10,22) parallel zum zweiten Ausrückbetätigungsmittel (23) angeordnet ist.

4. Ausrückvorrichtung nach Anspruch 3, **dadurch gekennzeichnet, dass** der Kolben des ersten Ausrückbetätigungsmittels (10,22) parallel zum Kolben des zweiten Ausrückbetätigungsmittels (23) verlagerbar angeordnet ist.

5. Ausrückvorrichtung nach Anspruch 3 oder 4, **dadurch gekennzeichnet, dass** ein Gehäuse (26) vorgesehen ist, in welchem die Kolben-Zylindereinheit (24) des ersten Ausrückbetätigungsmittels (22) und die Kolben-Zylindereinheit (25) des zweiten Ausrückbetätigungsmittels (23) angeordnet sind.

6. Ausrückvorrichtung nach einem der vorhergehenden Ansprüche, **dadurch gekennzeichnet, dass** eine Kolben-Zylindereinheit (11,24,25) zwei Kolben (15,16) aufweist, welche relativ zueinander verlagerbar sind, wobei einer der Kolben (16) dazu dient, das Kupplungsbetätigungsmittel (16,29) zu beaufschlagen.

7. Ausrückvorrichtung nach Anspruch 1 oder 3 bis 6, **dadurch gekennzeichnet, dass** das zweite Ausrückbetätigungsmittel (30) eine Seilzugvorrichtung aufweist, welche einen Aktuator (32) zur Beaufschlagung eines am Kupplungsbetätigungsmittel (33) angelenkten Seils (31) auf Zug zu beaufschlagen.

8. Ausrückvorrichtung nach Anspruch 7, **dadurch gekennzeichnet, dass** die Seilzugvorrichtung (30) an dem Kupplungsbetätigungsmittel (33) in der entgegengesetzten Richtung angreift, wie das erste Ausrückbetätigungsmittel (10).

9. Ausrückvorrichtung nach Anspruch 7 oder 8, **dadurch gekennzeichnet, dass** die Seilzugvorrichtung (30) relativ zu dem Kupplungsbetätigungsmittel (33) auf entgegengesetzter Seite angeordnet ist, wie das erste Ausrückbetätigungsmittel (10).

10. Ausrückvorrichtung nach einem der vorhergehenden Ansprüche, **dadurch gekennzeichnet, dass** das Kupplungsbetätigungsmittel (6,29,33) ein verschwenkbarer Ausrückhebel ist.
